(19) Europäisches Patentamt
European Patent Office
Office européen des brevets

(11) **EP 2 911 392 B1**

(12) **EUROPEAN PATENT SPECIFICATION**

(45) Date of publication and mention
of the grant of the patent:
**27.10.2021 Bulletin 2021/43**

(51) Int Cl.:
*H04N 13/00* (2018.01)     *G06T 7/00* (2017.01)
*G01S 17/02* (2020.01)     *G01S 13/86* (2006.01)
*G01S 13/93* (2020.01)

(21) Application number: **15156299.8**

(22) Date of filing: **24.02.2015**

(54) **PARALLAX CALCULATION SYSTEM, INFORMATION PROCESSING APPARATUS, INFORMATION PROCESSING METHOD, AND PROGRAM**

PARALLAX-BERECHNUNGSSYSTEM, INFORMATIONSVERARBEITUNGSVORRICHTUNG, INFORMATIONSVERARBEITUNGSVERFAHREN UND PROGRAMM

SYSTÈME DE CALCUL DE PARALLAXE, APPAREIL DE TRAITEMENT D'INFORMATIONS, PROCÉDÉ DE TRAITEMENT D'INFORMATIONS ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2014 JP 2014033682**
**19.02.2015 JP 2015030367**

(43) Date of publication of application:
**26.08.2015 Bulletin 2015/35**

(73) Proprietor: **Ricoh Company, Ltd.**
**Tokyo 143-8555 (JP)**

(72) Inventors:
• **Sekiguchi, Hiroyoshi**
**Tokyo 143-8555 (JP)**
• **Yokota, Soichiro**
**Tokyo 143-8555 (JP)**
• **Guan, Haike**
**Tokyo 143-8555 (JP)**
• **Suzuki, Shuichi**
**Yokohama-shi, Kanagawa 222-8530 (JP)**
• **Nakajima, Mitsuru**
**Yokohama-shi, Kanagawa 222-8530 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**EP-A1- 1 909 064     JP-A- 2004 028 727**
**US-A- 5 633 705**

• **HERNÂ'N BADINO ET AL: "Integrating LIDAR into Stereo for Fast and Improved Disparity Computation", 3D IMAGING, MODELING, PROCESSING, VISUALIZATION AND TRANSMISSION (3DIMPVT), 2011 INTERNATIONAL CONFERENCE ON, IEEE, 16 May 2011 (2011-05-16), pages 405-412, XP031896512, DOI: 10.1109/3DIMPVT.2011.58 ISBN: 978-1-61284-429-9**
• **NAIR RAHUL ET AL: "A Survey on Time-of-Flight Stereo Fusion", 11 September 2013 (2013-09-11), INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 105 - 127, XP047269358, ISBN: 978-3-642-17318-9**

**Description**

BACKGROUND OF THE INVENTION

1. Field of the Invention

The present invention generally relates to a parallax calculation system, an information processing apparatus, an information processing method, and a program, which are capable of performing parallax calculation.

2. Description of the Related Art

In related art technologies, there has been known a stereo distance measurement method in which distances to objects which are targets to be imaged are calculated by performing parallax calculation on the captured images (stereo images) which are captured by plural imaging sections such as a stereo camera, etc., (see, for example, Japanese Laid-open Patent Publication Nos. 2003-346130, 2013-114477, and 2013-174494, and International Publication Pamphlet No. 2011/096251).

According to the stereo distance measurement method, it is possible to calculate distances from the imaging sections to the objects (i.e., objects to be imaged) which are drawn as the object images in the captured images.

EP 1 909 064 A1 discloses an object detection device comprising a determining device for determining whether a first detecting device and a second detecting device detected an identical object. Stereo images are acquired by CCD cameras and an object detection unit detects object based on the acquired stereo images. A distance to the object may be calculated as a distance itself, or a disparity corresponding to the distance may be used as it.

US 5,633,705 disclosed an obstacle detecting system for a motor vehicle which compares video signals delivered from an upper and a lower video camera, respectively, to thereby detect a deviation between the images represented by both video signals, and determines the distance to the obstacle in accordance with the principle underlying the trigonometrical measurement.

Hernâ'n Badino et al.: "Integration LIDAR into Stereo for Fast and Improved Disparity Computation", 3D IMAGING, MODELING, PROCESSING, VISUALIZATION AND TRANSMISSION (3DIMPVT), 2011 INTERNATIONAL CONFERENCE ON, IEEE, 16 May 2011 (2011-05-16), pages 405-412, XP031896512, DOI: 10.1109/3DIMPVT.2011.58, ISBN: 978-1-61284-429-0 discloses a method of fusing the output of stereo and laser range finders in order to compute expected disparities.

NAIR RAHUL ET AL: "A Survey on Time-of-Flight Stereo Fusion", INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, ISBN: 978-3-642-17318-9 discloses generation of a time-of-flight-based depth map using the time-of-flight depth and the output of a stereo algorithm as input to an image fusion step. The time-of-flight data is used as an initial and/or to reduce the search space for subsequent stereo refinements.

SUMMARY OF THE INVENTION

According to an aspect of the present invention, an information processing apparatus, method and computer-readable program according to the appended claims.

BRIEF DESCRIPTION OF THE DRAWINGS

Other objects, features, and advantages of the present invention will become more apparent from the following description when read in conjunction with the accompanying drawings, in which:

FIG. 1 illustrates an example overall configuration of a parallax calculation system according to an embodiment;
FIG. 2 illustrates an example layout of a laser radar distance measurement section and an imaging section, an example of light emission directions of laser light from the laser radar distance measurement section, and an example imaging range of the imaging section in a case where the parallax calculation system is applied in a vehicle;
FIG. 3 illustrates an example hardware configuration of an information processing apparatus included in the parallax calculation system;
FIG. 4 illustrates an example functional configuration of a parallax image generation section;
FIG. 5 illustrates an example of captured images including a pattern image;
FIGS. 6A and 6B illustrate example relationships between a shift position and a likelihood degree at a predetermined pixel in the captured images including the repeated pattern;

FIG. 7 illustrates an example of captured images including a low texture area;

FIGS. 8A and 8B illustrate example relationships between the shift position and the likelihood degree at a predetermined pixel in the captured images including the low texture area;

FIG. 9 is a flowchart of an example parallax calculation process in the parallax calculation system;

FIG. 10 is a flowchart of an example stereo image process in the information processing apparatus;

FIGS. 11A through 11C illustrates an example of the light emission directions of the laser light from the laser radar distance measurement section;

FIG. 12 illustrates an example layout of the laser radar distance measurement section and the imaging section in a case where the parallax calculation system is applied to Factory Automation (FA);

FIG. 13 illustrates an example of captured images including a repeated pattern; and

FIGS. 14A and 14B illustrate example relationships between the shift position and the likelihood degree at a predetermined pixel in the captured images including the repeated pattern.

## DETAILED DESCRIPTION OF THE PREFERRED EMBODIMENTS

In related art, when a conventional stereo distance measurement technique is used in parallax calculation, the calculation accuracy is likely to be influenced by characteristics of captured images.

For example, in a case where a low texture area is included in a captured image, an error is likely to occur in parallax calculation in the area. Similarly, in a case where a repeated pattern is included in a captured image, an error is likely to occur in parallax calculation.

Due to such problems, in the parallax calculation which is used in the stereo measurement distance technique, it is desired to reduce frequency of occurrence of errors in an area where an error is likely to occur in captured images in related art, so that it becomes possible to improve the accuracy in the parallax calculation.

The present invention is made in light of the above problem, and may improve accuracy in parallax calculation.

In the following, embodiments of the present invention are described with reference to the accompanying drawings. In the description and the figured of the present application, the same reference numerals are used to describe substantially the same elements, and repeated descriptions thereof may be omitted.

First embodiment

1. Overall configuration of parallax calculation system

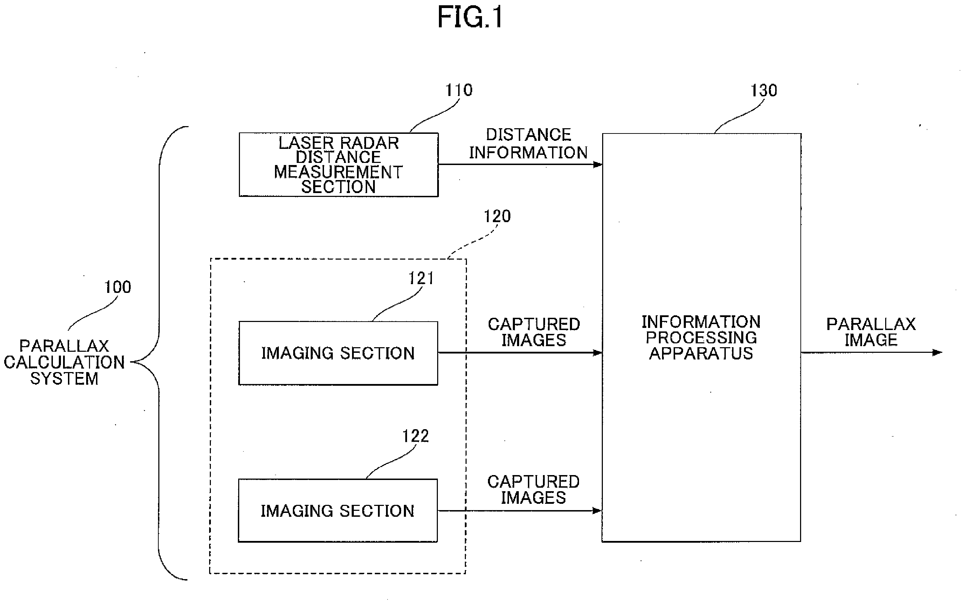

First, an example overall configuration of a parallax calculation system according to this embodiment is described. FIG. 1 illustrates an example overall configuration of a parallax calculation system 100 according to this embodiment. As illustrated in FIG. 1, the parallax calculation system 100 includes a laser radar distance measurement section 110, a stereo imaging section 120, and an information processing apparatus 130.

The laser radar distance measurement section 110 transmits and receives pulsed laser light so as to detect an object which the pulsed laser light irradiates. Further, the laser radar distance measurement section 110 calculates the distance to the object which the pulsed laser light irradiates, and transmits distance information to the information processing apparatus 130.

The stereo imaging section 120 includes a monocular imaging (image capturing) section 121 and another monocular imaging (image capturing) section 122. The imaging sections 121 and 122 capture images at every predetermined frame cycle, and transmit the respective captured images to the information processing apparatus 130.

The information processing apparatus 130 preforms parallax calculation on the captured images which are transmitted from the stereo imaging section 120, and generates a parallax image. In performing the parallax calculation, the information processing apparatus 130 uses the distance information which is transmitted from the laser radar distance measurement section 110 (details are described below).

2. Layout of the laser radar distance measurement section 110 and the stereo imaging section 120 in the parallax calculation system 100

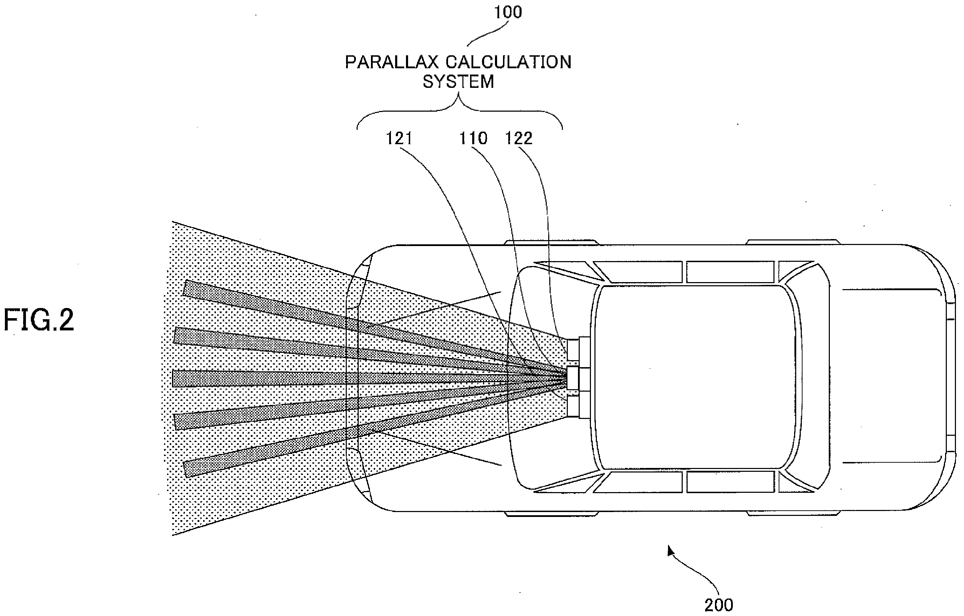

Next, an example layout of the laser radar distance measurement section 110 and the stereo imaging section 120, an example of light emission directions of laser light from the laser radar distance measurement section 110, and an example imaging range of the imaging section are described in a case where the parallax calculation system 100 is applied in a vehicle. FIG. 2 illustrates an example layout of the laser radar distance measurement section 110 and the stereo imaging section 120, an example of light emission directions of laser light from the laser radar distance measurement section 110, and an example imaging range of the imaging section in the case where the parallax calculation system 100 is applied in a vehicle.

As illustrated in FIG. 2, the laser radar distance measurement section 110 and the imaging sections 121 and 122 are attached on a ceiling part and near a windscreen (front window) inside a vehicle 200 and in the middle position in the width direction of the vehicle 200.

By being attached thereon, the laser radar distance measurement section 110 emits (radiates) laser light in the front moving direction of the vehicle 200. Further, the imaging sections 121 and 122 capture images in the front moving direction of the vehicle 200.

Here, it is assumed that the radiation direction of the laser light from the laser radar distance measurement section 110 is adjusted in a manner so that the radiation range of the irradiated laser light is included in an imaging range of the imaging sections 121 and 122.

It is further assumed that the laser radar distance measurement section 110 repeatedly emits (radiates) laser light while the imaging sections 121 and 122 capture one frame of image (image data). FIG. 2 schematically illustrates a case where the laser radar distance measurement section 110 emits laser light five times while the imaging sections 121 and 122 capture one frame of image (image data).

As described, by repeatedly radiating laser light while one frame of image is captured, it becomes possible for the information processing apparatus 130 to increase the number of times to refer to the distance information in performing the parallax calculation of one frame of captured image. By doing this, it becomes possible to further reduce the occurrence of errors in the parallax calculation. Here, it is needless to say that the number of the radiation times of laser light is not limited to five. For example, the number of the radiation times of laser light may be only one.

3. Configuration of the information processing apparatus 130

Next, an example hardware configuration of the information processing apparatus 130 is described. As described above, the information processing apparatus 130 performs the parallax calculation on the captured images transmitted from the stereo imaging section 120, and generates a parallax image. Further, the parallax image generated by the information processing apparatus 130 is used, for example, to calculate the distances to the objects that are drawn as the object imaged in the captured images.

Therefore, before starting the description of the hardware configuration of the information processing apparatus 130, the outline of the stereo distance measurement technique is described first, which calculates the distances to the objects by using the parallax image generated by the information processing apparatus 130.

3.1 Outline of stereo distance measurement technique

Generally, in a stereo distance measurement technique, a same point is extracted by acquiring a relationship (likelihood degree) between a pair of the captured images transmitted from two monocular imaging sections disposed from side to side (right and left). Then, the distance to the same point is calculated in the same manner as triangulation by calculating the parallax relative to the extracted same point.

Specifically, based on a pair of captured images which are transmitted from the two monocular imaging sections, parts where the same object are drawn is extracted. When the two monocular imaging sections are disposed (installed) from side to side (right and left), the positions where the same object is drawn in the pair of captured images are shifted right and left. Here, the same point in the same object between the pair of captured images is extracted by shifting one captured image relative to the other captured image pixel by pixel (per one pixel) in the left and right direction and acquiring (detecting) the position where the captured images are overlapped the most with each other (i.e., the position where the likelihood degree is the highest). Then, a shift amount (parallax) between the extracted same points is calculated, so that the distance to the same point is calculated by using the distance between the optical axes of the two monocular imaging sections.

Here, when "n" denotes the number of the shifted pixels, "f" denotes the focal length of camera lenses of the monocular imaging sections, "B" denotes the base length (distance between optical axes of the monocular imaging sections), and "d" denotes the pixel pitch, the distance "Z" to the same points in the same objects can be calculated based on the following formula.

$$Z = \frac{B \cdot f}{n \cdot d}$$

Formula 1

Here, the denominator (n×d) in Formula 1 denotes the parallax.

3.2 Configuration of the information processing apparatus 130 that performs parallax calculation to realize the stereo distance measurement technique

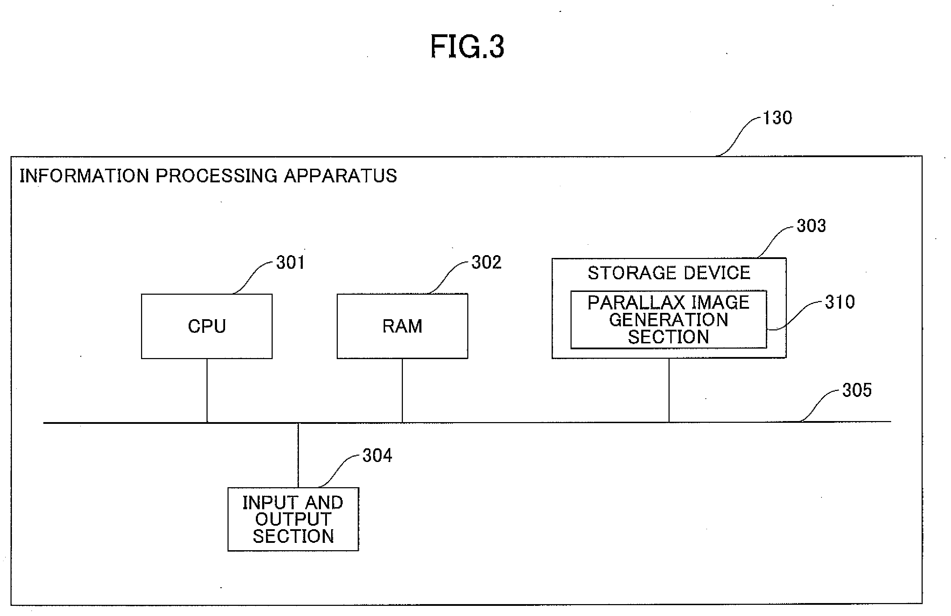

Next, an example hardware configuration of the information processing apparatus that performs parallax calculation to realize the stereo distance measurement technique described above. FIG. 3 illustrates an example hardware configuration of an information processing apparatus that performs parallax calculation to realize the stereo distance measurement technique.

As illustrated in FIG. 3, the information processing apparatus 130 includes a Central Processing Unit (CPU) 301, a Random Access Memory (RAM) 302, a storage device 303, and an input and output section 304. It is assumed that those elements of the information processing apparatus 130 are mutually connected to each other via a bus 305.

The CPU 301 is a computer that executes a program (to function as a parallax image generation section 310) stored in the storage device 303. By executing the program by the CPU 301, the parallax calculation is performed on the captured images transmitted from the stereo imaging section 120, and the parallax image is generated in the information processing apparatus 130.

Namely, the same point in the same object between the pair of captured images is extracted by acquiring the likelihood degree by shifting one of the captured images relative to the other of the captured images pixel by pixel in the left and right direction and by referring to the distance information transmitted from the laser radar distance measurement section 110. Then, the shift amount (parallax) is calculated between the extracted same points, and the parallax image is generated.

The RAM 302 is a main storage device such as a Dynamic Random Access memory (DRAM), a Static Random Access Memory (SRAM), etc. The RAM 302 functions as a work area which is developed (used) when a program stored in the storage device 303 is executed by the CPU 301.

The storage device 303 is a memory such as an Erasable Programmable Read-Only Memory (EPROM), an Electrically Erasable Programmable Read-Only Memory (EEPROM), etc., and stores a program which causes the CPU 301 to function as the parallax image generation section 310.

The input and output section 304 is an interface section to communicate with the laser radar distance measurement section 110 and the stereo imaging section 120 (the imaging sections 121 and 122).

4. Functional configuration of the parallax image generation section 310

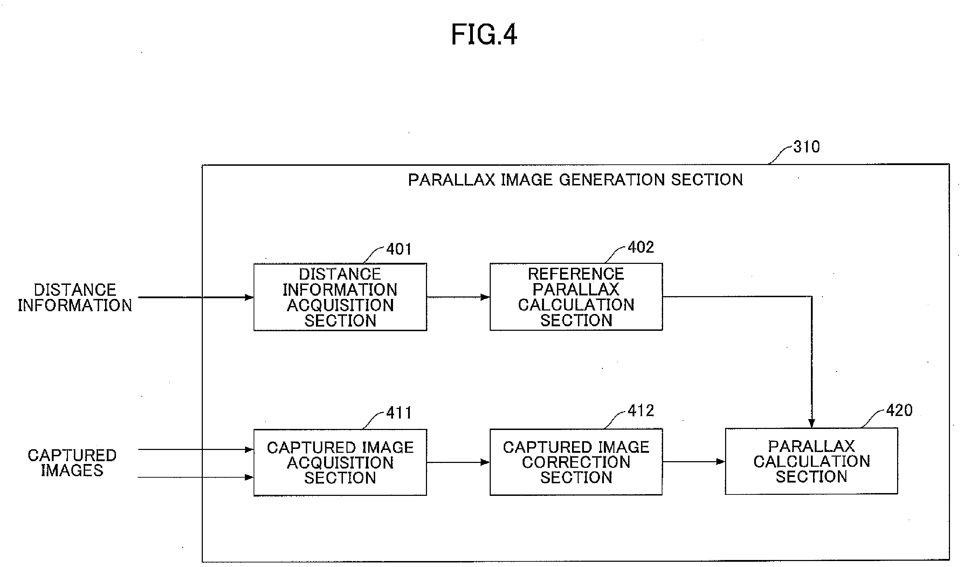

Next, an example functional configuration of a parallax image generation section 310 is described. FIG. 4 illustrates an example functional configuration of the parallax image generation section 310.

As illustrated in FIG. 4, the parallax image generation section 310 includes a distance information acquisition section 401, a reference parallax calculation section 402, a captured image acquisition section 411, a captured image correction section 412, and a parallax calculation section 420.

The distance information acquisition section 401 acquires the distance information which indicates the distance to the object (reflection position) from the laser radar distance measurement section 110, the distance being detected by the laser radar distance measurement section 110 by radiating and receiving laser light while the imaging sections 121 and 122 captures one frame of images.

The reference parallax calculation section 402 calculates the parallax ("n×d") by using Formula 1 based on the distance information "Z" acquired by the distance information acquisition section 401, the focal length "f" of the camera lens of the imaging sections 121 and 122, and the base length "B" (distance between optical axes of the monocular imaging sections). In the following, the parallax calculated based on the distance information "Z" by the reference parallax calculation section 402 is called "reference parallax". The reference parallax calculation section 402 outputs the calculated reference parallax to the parallax calculation section 420.

The captured image acquisition section 411 acquires the images captured by the imaging sections 121 and 122 ("stereo image") at a predetermined frame cycle. The captured image correction section 412 performs various correction processes such as gamma correction, distortion correction, etc., on the captured images acquired by the captured image acquisition section 411.

The parallax calculation section 420 performs parallax calculation on the captured images on which various correction processes have been performed by the captured image correction section 412, and generates a parallax image. Here, in the parallax calculation, the parallax calculation section 420 extracts the same points between the captured images by referring to the reference parallax that is calculated based on the distance information by the reference parallax calculation section 402.

5. An example of captured images including a repeated pattern

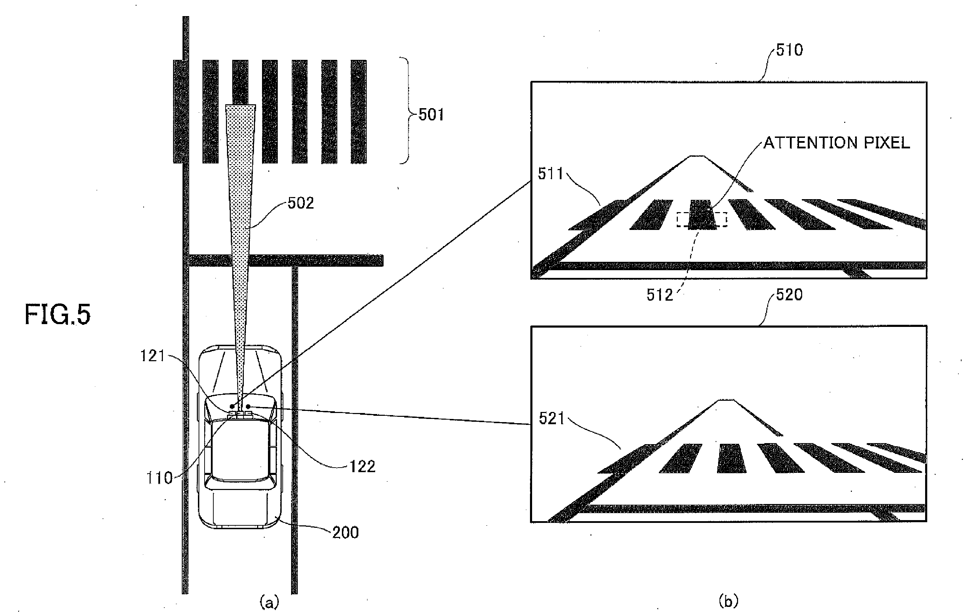

Next, images captured by the imaging sections 121 and 122 of the parallax calculation system 100 applied to a vehicle are described. FIG. 5 illustrates an example of images, which include a repeated pattern where an error is likely to occur in the parallax calculation, captured by the imaging sections 121 and 122 of the parallax calculation system 100.

As illustrated in part (a) of FIG. 5, when a vehicle 200 runs on a road, the imaging sections 121 and 122 capture images including a road marking such as a pedestrian crossing (crosswalk) 501, etc. As illustrated in part (b) of FIG. 5, in captured images 510 and 520, the pedestrian crossings 501 that are captured by the imaging sections 121 and 122 are drawn as pedestrian crossing images 511 and 521, respectively, having a repeated pattern in left and right direction.

Here, the captured images 510 and 520 are captured by the imaging sections 121 and 122, respectively.

In part (a) of FIG. 5, an irradiation range 502 indicates one radiation range corresponding to one emission of laser light among plural emissions of laser light from the laser radar distance measurement section 110 while the captured images 510 and 520 are captured. Further, a rectangular area 512 in the captured image 510 of part (b) of FIG. 5 denotes an area in the captured image 510 corresponding to the irradiation range 502 which laser light from the laser radar distance measurement section 110 irradiates. In the following, the pixels included in the rectangular area 512 are called "irradiated-area pixels".

6. Description of functions of the parallax calculation section 420 (part 1)

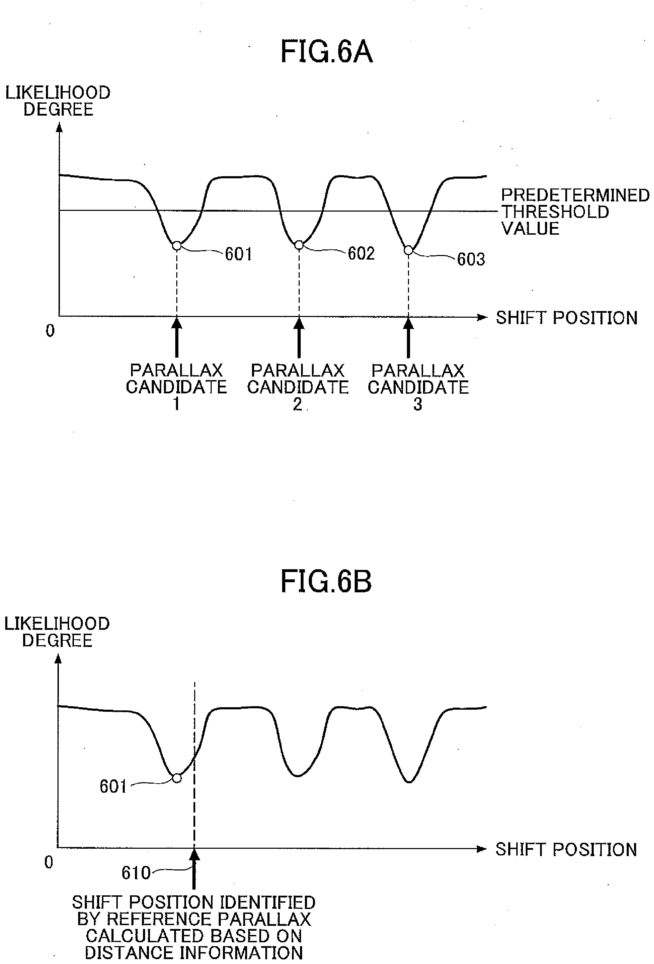

Next, the functions of the parallax calculation section 420 are described. FIGS. 6A and 6B illustrate the likelihood degree of a predetermined definition (target pixel) of the captured image 510 when the captured image 510 is shifted pixel by pixel relative to the captured image 510 in a case where it is assumed that the captured image 510 is a "reference image" and the captured image 520 is a "standard image". In FIGS. 6A and 6B, a horizontal axis denotes a shifted position when the captured image 510 is shifted, and a vertical axis denotes the likelihood degree corresponding to the shifted position. Here, it is assumed that the values of the vertical axis are normalized in a manner so that the value becomes smaller as the likelihood degree becomes greater and the value becomes greater as the likelihood degree is lower. In the following, the functions of the parallax calculation section 420 are further described with reference to FIGS. 6A and 6B.

As described above, the captured images 510 and 520 depict the pedestrian crossing images 511 and 521, respectively, which are the repeated patterns in the left and right direction. Due to this, in a case where the captured image ("reference image") 510 is shifted relative to the captured image 520 ("standard image") pixel by pixel, as illustrated in FIG. 6A, the likelihood degree of the attention pixel of the captured image 510 has plural extreme points (local minimal points 601, 602, and 603). Further, all of the extreme points are values which are less than a predetermined threshold value.

In order to perform the parallax calculation, first, the parallax calculation section 420 extracts the points where the value of the likelihood degree becomes extreme values (in the case of FIG. 6A, the local minimal values) and where the likelihood degree is higher than a predetermined likelihood degree (in the case of FIG. 6A, where the value of the likelihood degree is smaller than the predetermined threshold value). As a result, the parallax calculation section 420 extracts the local minimal points 601, 602, and 603. Then, the parallax calculation section 420 sets the shift positions of the extracted local minimal points 601, 602, and 603 as the parallax candidates (parallax candidates 1, 2, and 3, respectively).

Here, in the parallax calculation method in related art, the point having the greatest likelihood degree (i.e., the point where the value of the likelihood degree is the lowest) is extracted as the same point between the captured images from among the extracted plural local minimal points 601, 602, and 603, so that the corresponding shift position (in the case of FIG. 6A, the shift position corresponding to the local minimal point 603) is used in further parallax calculation.

On the other hand, in the parallax calculation section 420 of the information processing apparatus 130 according to this embodiment, when plural local minimal points 601, 602, and 603 are extracted, the parallax calculation section 420 refers to the "reference parallax" calculated by the reference parallax calculation section 402. Then, the parallax calculation section 420 extracts the parallax candidate that is to be used for further parallax calculation from among the plural parallax candidates 1, 2, and 3, by extracting the same point between the captured images based on a relationship between the shift positions of the local minimal points 601, 602, and 603 and the shift position that is identified by the "reference parallax", and determines the parallax.

Details of the above calculation are described with reference to FIG. 6B. The arrow 610 of FIG. 6B indicates the shift position which is identified by the "reference parallax" calculated based on the distance information by the reference parallax calculation section 402. The parallax calculation section 420 extracts the local minimal point 601, which is the closest (nearest) to the shift position 610 which is identified by the "reference parallax" from among the local minimal points 601, 602, and 603, as the same point between the captured images 510 and 520. Then, the parallax calculation section 420 uses the shift position of the local minimal point 601 (parallax candidate 1) in further parallax calculation, so as to determine the parallax.

As described above, in the parallax calculation section 420, it becomes possible to use the most likely parallax candidate in the parallax calculation by extracting (selecting) the parallax candidate from among plural parallax candidates by using the "distance information" calculated in the laser radar distance measurement section 110. Namely, even when the captured images include a repeated pattern in the left and right direction where an error is likely to occur, it becomes possible to extract an appropriate local minimal point and use the extracted local minimal point in further parallax calculation. As a result, it becomes possible to reduce frequency of occurrence of an error, so that the accuracy of the parallax calculation can be improved.

7. An example of captured images including a low texture area

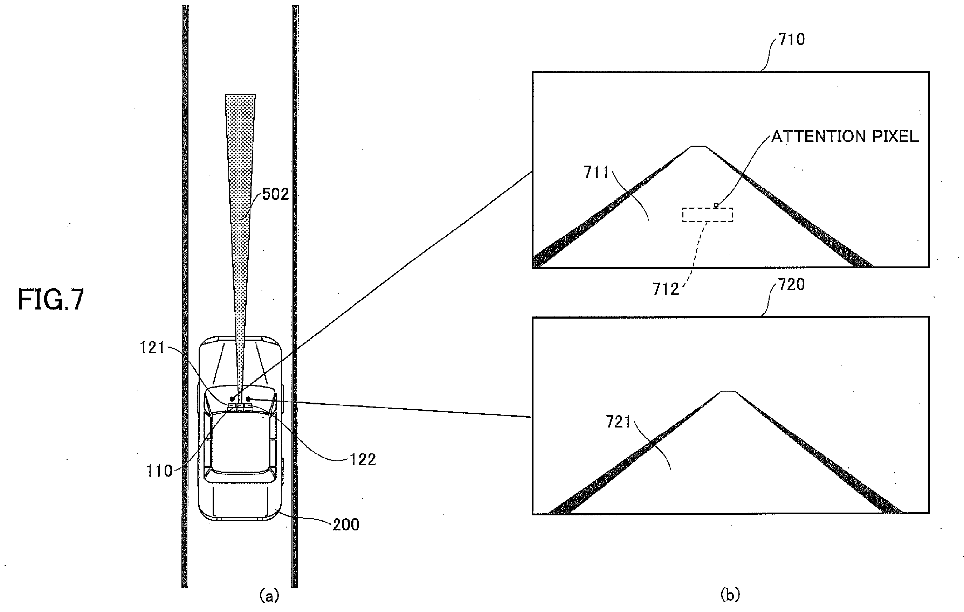

Next, other images captured by the imaging sections 121 and 122 of the parallax calculation system 100 applied to a vehicle are described. FIG. 7 illustrates an example of images, which include a low texture area where an error is likely to occur in the parallax calculation, captured by the imaging sections 121 and 122 of the parallax calculation system 100.

As illustrated in part (a) of FIG. 7, when a vehicle 200 runs on a road, the imaging sections 121 and 122 capture images of the road surface. The images of the road surface captured by the imaging sections 121 and 122 are drawn as road surface images 711 and 721 which are low texture areas.

Here, the captured images 710 and 720 are captured by the imaging sections 121 and 122, respectively.

In part (a) of FIG. 7, an irradiation range 702 indicates one radiation range corresponding to one emission of laser light among plural emissions of laser light from the laser radar distance measurement section 110 while the captured images 710 and 720 are captured. Further, a rectangular area 712 in the captured image 710 of part (b) of FIG. 7 denotes an area in the captured image 710 corresponding to the irradiation range 702 where laser light from the laser radar distance measurement section 110 irradiates the road surface. In the following, the pixels included in the rectangular area 512 are called "irradiated-area pixels".

8. Description of functions of the parallax calculation section 420 (part 2)

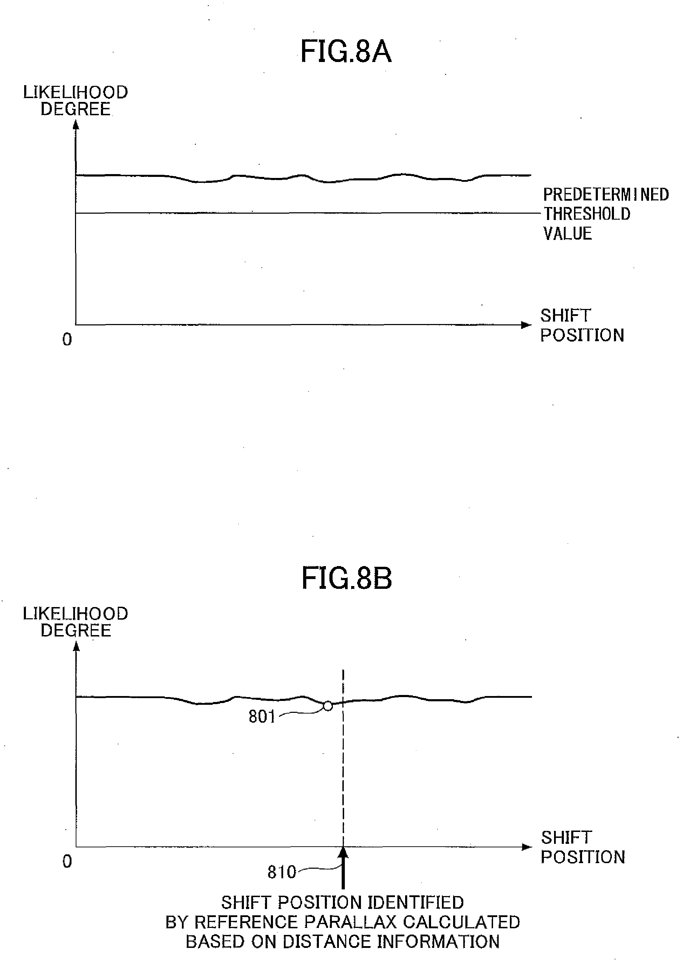

Next, the functions of the parallax calculation section 420 are described. FIGS. 8A and 8B illustrate the likelihood degree of a predetermined definition (target pixel) of the captured image 710 when the captured image 710 is shifted pixel by pixel relative to the captured image 720 in a case where it is assumed that the captured image 710 is the "reference image" and the captured image 720 is the "standard image". In FIGS. 8A and 8B, a horizontal axis denotes a shifted position when the captured image 710 is shifted, and a vertical axis denote the likelihood degree corresponding to the shifted position. Here, it is assumed that the values of the vertical axis are normalized in a manner so that the value becomes smaller as the likelihood degree becomes greater and the value becomes greater as the likelihood degree is lower. In the following, the functions of the parallax calculation section 420 are further described with reference to FIGS. 8A and 8B.

As described above, the captured images 710 and 720 depict the road surface images 711 and 721, respectively, which are low texture areas. Due to this, in a case where the captured image ("reference image") 710 is shifted relative to the captured image 720 ("standard image") pixel by pixel, as illustrated in FIG. 8A, the likelihood degree of the target pixel becomes substantially flat (even). Further, the value of the likelihood degree is always greater than a predetermined threshold value.

As described above, in order to perform the parallax calculation, first, the parallax calculation section 420 attempts to extract the point where the value of the likelihood degree becomes extreme values (in the case of FIG. 8A, local minimal values) and where the likelihood degree is higher than a predetermined likelihood degree (in the case of FIG. 8A, where the value of the likelihood degree is smaller than the predetermined threshold value). However, in the case of FIG. 8A, the value of the likelihood degree is always greater than the predetermined threshold value. Therefore, there is no point to be extracted, so that no Parallax candidate is extracted.

Here, in the parallax calculation method in related art, when no parallax candidate is extracted, for example, an error output, etc., is output and the parallax calculation is terminated.

On the other hand, in the parallax calculation section 420 of the information processing apparatus 130 according to this embodiment, even when no parallax candidate is extracted, the parallax calculation section 420 refers to the "reference parallax" calculated by the reference parallax calculation section 402. Then, the parallax calculation section 420 extracts the local minimal point, which is the closest to the shift position identified by the "reference parallax", as the same point between the captured images, and determines the parallax by using the shift position of the extracted local minimal point.

Details of the above calculation are described with reference to FIG. 8B. The arrow 810 of FIG. 8B indicates the shift position which is identified by the "reference parallax" calculated based on the distance information by the reference parallax calculation section 402. Further, a local minimal point 801 indicates the local minimal point, the position of which is closest to the shift position identified by the "reference parallax" from among plural local minimal points in the values of the likelihood degree. The parallax calculation section 420 extracts the local minimal point 801, which is the closest (nearest) to the shift position which is identified by the "reference parallax", as the same point between the captured images 710 and 720. Then, the parallax calculation section 420 uses the shift position of the local minimal point 801 in further parallax calculation, so as to determine the parallax.

As described above, in the parallax calculation section 420, it becomes possible to use the most probable local minimal point in the parallax calculation by extracting (selecting) the parallax candidate from among plural parallax candidates by using the "distance information" calculated in the laser radar distance measurement section 110 even when no parallax candidate is extracted. Namely, even when the captured images include a low texture area where an error is likely to occur, it becomes possible to extract an appropriate local minimal point and use the extracted local minimal point in further parallax calculation. As a result, it becomes possible to reduce frequency of occurrence of an error, so that the accuracy of the parallax calculation can be improved.

9. Flow of a parallax calculation process in the parallax calculation system 100

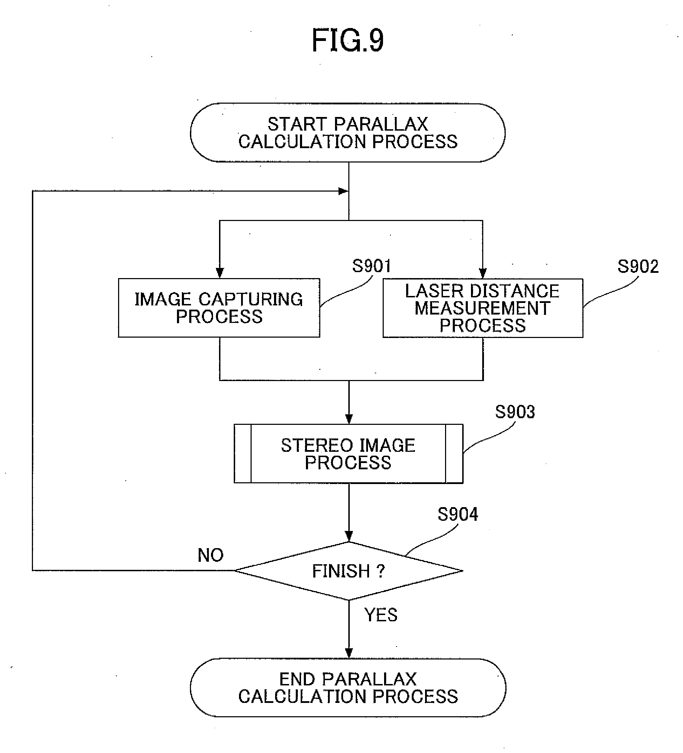

Next, a flow of an example parallax calculation process in the parallax calculation system 100 according to this embodiment is described. FIG. 9 is a flowchart of an example parallax calculation process in the parallax calculation system 100.

When the parallax calculation process in the parallax calculation system 100 starts, in step S901, the imaging sections 121 and 122 perform an image capturing process in synchronization with each other to capture respective images in accordance with an instruction from the information processing apparatus 130. Further, in step S902, the laser radar distance measurement section 110 performs a laser distance measurement process to calculate the distance information based on the radiation and reception of laser light.

Here, it is assumed that the image capturing process in step S901 and the laser distance measurement process in step S902 are executed in parallel. Namely, while the imaging sections 121 and 122 capture one frame of the respective images, the laser radar distance measurement section 110 performs a laser distance measurement process that emits (radiates) and receives pulsed laser light.

In step S903, the information processing apparatus 130 performs the parallax calculation based on the one frame of the images, so as to perform a stereo image process to generate the parallax image. In this case, in the information processing apparatus 130, the reference parallax is calculated based on the distance information calculated in the laser distance measurement process which is performed in parallel with the image capturing process, so that the calculated reference parallax is used in the parallax calculation.

In step S904, it is determined whether a termination instruction is input to terminate the parallax calculation process. When it is determined that the termination instruction is not input, the process goes back to steps S901 and S902, so that the image capturing process is performed on the next frame and the laser distance measurement process is performed by irradiating and receiving the next pulsed laser light.

After that, until the termination instruction to terminate the parallax calculation process is input, the image capturing process is performed on a frame basis and the laser distance measurement process is performed on the frame basis, so that the stereo image process is continuously performed on the frame basis.

On the other hand, when it is determined that the termination instruction to terminate the parallax calculation process is input in step S904, the process ends.

10. Stereo image process by the information processing apparatus 130

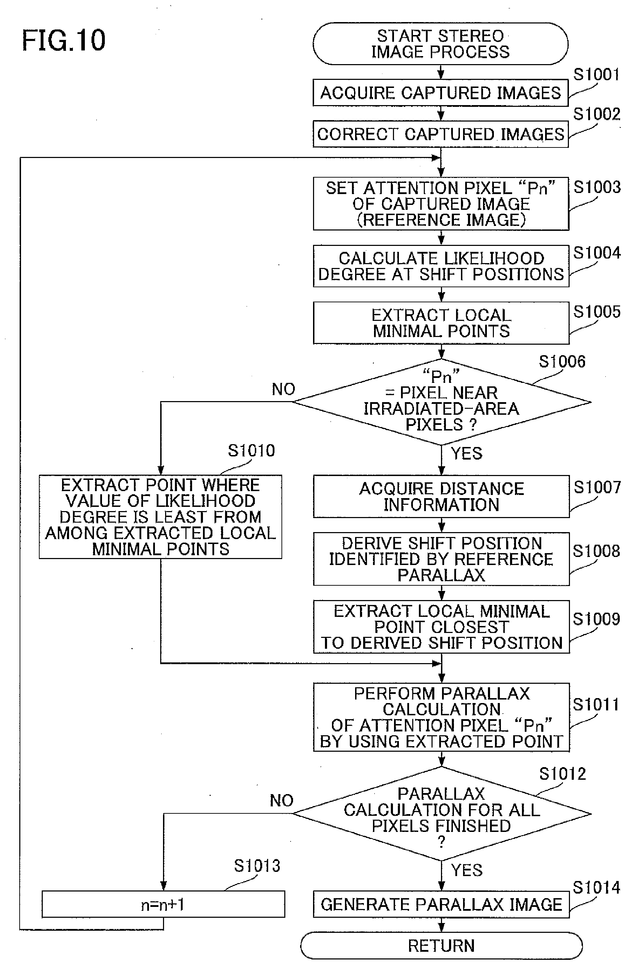

Next, a detailed flow of the stereo image process (step S903) by the information processing apparatus 130 is described with reference to FIG. 10. FIG. 10 is a flowchart of a detailed example flow of the stereo image process (step S903) by the information processing apparatus 130.

As described above, a case where the captured image includes an area where an error is more likely to occur includes a case where plural parallax candidates are extracted and a case where no parallax candidate is extracted. Therefore, in the description of the stereo image process below, in order to apply to both of the above cases, the description of the process of extracting the parallax candidate is omitted, and the process is described in which the same point between the captured images is extracted by using the extreme point and the reference parallax.

In step S1001, the captured image acquisition section 411 acquires one frame of images (a pair of the captured images (i.e., the reference image and the standard image)), which are captured by the imaging sections 121 and 122, from the imaging sections 121 and 122.

In step S1002, the captured image correction section 412 performs various corrections such as gamma correction, distortion correction, etc., on the one frame of the captured images (the pair of the captured images (the reference image and the standard image)) captured in step S1001.

In step S1003, the parallax calculation section 420 sets an attention pixel "Pn" which is included in the reference image and is a target pixel on which the parallax calculation is performed.

In step S1004, the likelihood degree is calculated at the shift positions of the set attention pixel "Pn". In step S1005, the local minimal points are extracted where the values of the likelihood degree calculated in step S1004 are the local minimal values.

In step S1006, the parallax calculation section 420 determines whether the attention pixel "Pn", which is set in step S1003, is a pixel near the pixels in the reference image corresponding to the radiation range on which laser light is irradiated (the pixel near the irradiated-area pixels).

Here, the term "pixel near the irradiated-area pixels refers to the pixels that constitute an object image in the reference image where the object which laser light irradiates is drawn, and that are other than the irradiated-area pixels.

Further, it is assumed that the coordinates of the irradiated-area pixels in the reference image are determined (set) in advance. Due to this, in step S1006, whether the attention pixel "Pn", which is set in step S1003, is the pixel in a predetermined range near the pixels set in advance is determined based on the coordinates.

When it is determined that the attention pixel "Pn" is the pixel near the irradiated-area pixels, the process goes to step S1007.

In step S1007, the distance information acquisition section 401 acquires the distance information of the irradiated-area pixels. In step S1008, the reference parallax calculation section 402 derives the reference parallax by using the distance information acquired in step S1007, and outputs the derived reference parallax to the parallax calculation section 420. Then, the parallax calculation section 420 derives the shift position that is identified based on the reference parallax which is output from the reference parallax calculation section 402.

In step S1009, from among the local minimal points extracted in step S1005, the local minimal point is extracted which is the closest to the shift position derived in step S1008, and the shift position corresponding to the extracted local minimal point is acquired. Then, the process goes to step S1011.

As described above, when it is determined that the attention pixel "Pn" is the pixel near the irradiated-area pixels, the parallax calculation section 420 uses the reference parallax. By doing this, when the irradiated-area pixels are included in an area where an error is like to occur with high frequency, it becomes possible to reduce the frequency of occurrence of an error in the area.

On the other hand, in step S1006, when it is determined that the attention pixel "Pn" is not the pixel near the irradiated-area pixels, the process goes to step S1010.

In step S1010, the parallax calculation section 420 extracts the local minimal point where the value of the likelihood degree is the lowest from among the local minimal points extracted in step S1005, and acquires the shift position corresponding to the extracted local minimal point. Then, the process goes to step S1011.

In step S1011, the shift position acquired in step S1009 or S1010 is used in the parallax calculation of the attention pixel "Pn".

In step S1012, it is determined whether the parallax calculation is performed on all the pixels in the one frame of the (captured) images acquired in step S1001. In step S1012, when it is determined that there exists a pixel on which the parallax calculation is not performed, the process goes to step S1013. In step S1013, after a counter "n" is incremented, the process goes back to step S1003, so that the next pixel is set as the attention pixel "Pn" and the processes in steps S1004 through S1011 are performed.

On the other hand, in step S1012, when it is determined that the parallax calculation is performed on all the pixels, the process goes to step S1014, so that the parallax image corresponding to the captured images is generated.

11. Summary

As is apparent from the above descriptions, in the parallax calculation system 100 according to this embodiment,

- laser light is radiated in the front moving direction of a vehicle, the front moving direction corresponding to the imaging direction of the stereo imaging section, so that the distance information indicating the distance to the object which the laser light radiated (i.e., the position where the laser light is reflected) is calculated by the laser radar distance measurement section 110.

Further, in the information processing apparatus 130 of the parallax calculation system 100,

- the reference parallax is derived based on the distance information calculated by the laser radar distance measurement section 110, the focal length of a camera lens of the imaging sections, and the base length;
- in order to acquire the same point between the captured images in the parallax calculation, the likelihood degree is calculated in the shift positions; and
- since it is possible to extract the extreme point which is the closest to the shift position identified by the calculated reference parallax from among the extreme points where the values of the likelihood degree are the extreme values, the parallax calculation is performed by using the shift position of the extracted extreme point.

By doing this, it becomes possible to extract an appropriate extreme point and calculate the parallax even when the captured images include a repeated pattern in the left and right direction or a low texture area where an error is more likely to occur so that plural parallax candidates or no parallax candidate is extracted.
As a result, it becomes possible to reduce frequency of occurrence of an error and improve the accuracy of the parallax calculation.

Second embodiment

In the above first embodiment, a case is described where the pulsed laser light radiated (emitted) multiple times onto the road surface on which the vehicle runs is radiated at substantially the same angle relative to the road surface. Namely, in the above first embodiment, a case is described where the pulsed laser light emits multiple times in a manner such that the distances between the laser radar distance measurement section 110 and the positions where the pulsed laser light irradiate are substantially the same with each other. In other words, a case is described where the laser light beams are irradiated onto the positions on the road surface in a manner that the positions have substantially the same distance from the laser radar distance measurement section 110 (see FIG. 2) when the vehicle runs on a flat road with no curves. Note that, however, the present invention is not limited to the case.
For example, the laser light beams from the vehicle may be emitted (radiated) in a manner such that the angle(s) of the laser light beams relative to the road surface on which the vehicle runs in some of the multiple times differ from that (those) in the rest of the multiple times. In other words, the laser light beams from the vehicle may be irradiated onto the road surface on which the vehicle runs in a manner such that the distance(s) between the positions which the laser light beams irradiate the road surface and the laser radar distance measurement section 110 in some of the multiple times differ from that (those) in the rest of the multiple times.

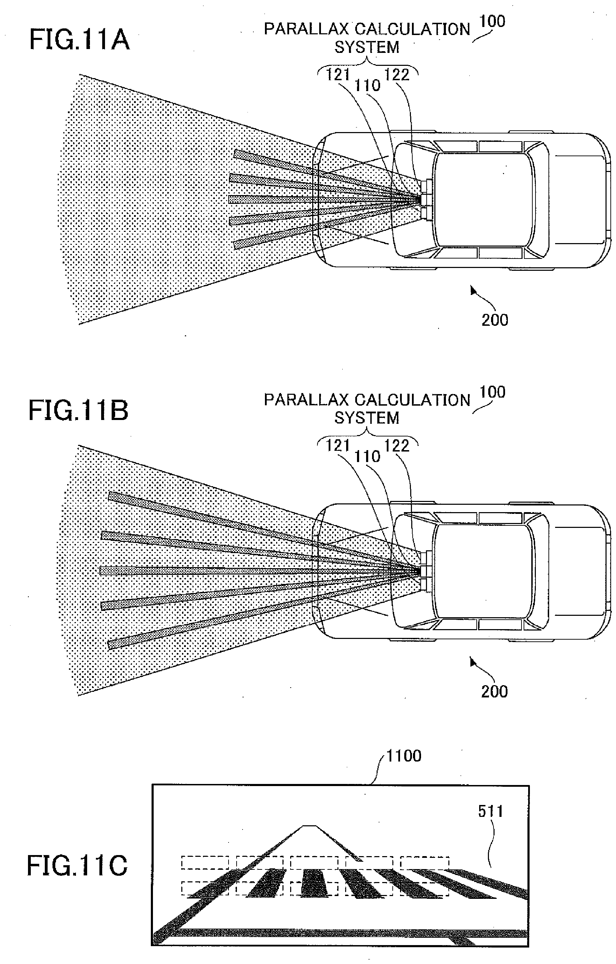

FIGS. 11A through 11C illustrate a case where pulsed laser light emits ten times from the laser radar distance measurement section 110 while the imaging sections 121 and 122 capture one frame of (captured) images. Among those ten times of the radiation, FIG. 11A illustrates the first five times (i.e., the first through the fifth) where the pulsed laser light is emitted (radiated) and FIG. 11B illustrates the second five times (i.e., the sixth through tenth) where the pulsed laser light is emitted.
FIG. 11A illustrates the case which is the same as the case of FIG. 2. Therefore, the description thereof is herein omitted. On the other hand, FIG. 11B illustrates a case where the elevation angle of the radiation direction of the laser light is adjusted in a manner so that the laser light is emitted (radiated) in the same radiation direction but so as to irradiate the positions which are farther than the irradiated positions in the case of FIG. 11A.
As described, by setting plural irradiation ranges in the depth direction (in the front moving direction of the vehicle), as a captured image 1100 of FIG. 11C, the number of the rectangular areas in the captured image 1100 corresponding to the irradiation ranges on the road surface on which the laser light emitted by the laser radar distance measurement section 110 is increased.
As a result, due to the increase of the numbers when the reference parallax is calculated, it becomes possible to further reduce the frequency of the occurrence of an error.

Third embodiment

In first and second embodiments described above, a case is described where the parallax calculation system 100 is applied to a vehicle. However, the present invention is not limited to the configuration. For example, the present invention is applied to Factory Automation (FA), so that when a product, etc., which is fed in a production line (factory), is picked up (selected), the distance to the product to be picked up can be calculated. In the following, details of this embodiment are described.

1. Layout of the laser radar distance measurement section 110 and the imaging sections 121 and 122 of the parallax calculation system 100

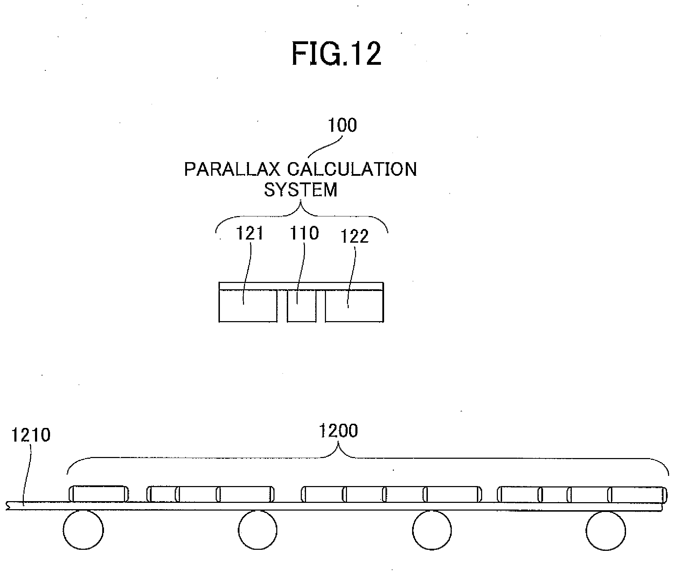

First, an example layout of the laser radar distance measurement section 110 and the imaging sections 121 and 122 when the parallax calculation system 100 according to this embodiment is applied to FA. FIG. 12 illustrates an example layout of laser radar distance measurement section 110 and the imaging sections 121 and 122 when the parallax calculation system 100 is applied to FA.
As illustrated in FIG. 12, the laser radar distance measurement section 110 is disposed between the imaging sections 121 and 122 and above a conveyor belt 1210 which feeds products 1200 (e.g., metal pipes). Here, it is assumed that the image capturing ranges of the imaging sections 121 and 122 are adjusted so as to capture the images of the products 1200. Further, it is also assumed that the laser radar distance measurement section 110 is adjusted so that the laser light therefrom can irradiate the products 1200.

2. Relationship between layout of objects and parallax and functions of the parallax calculation section 420

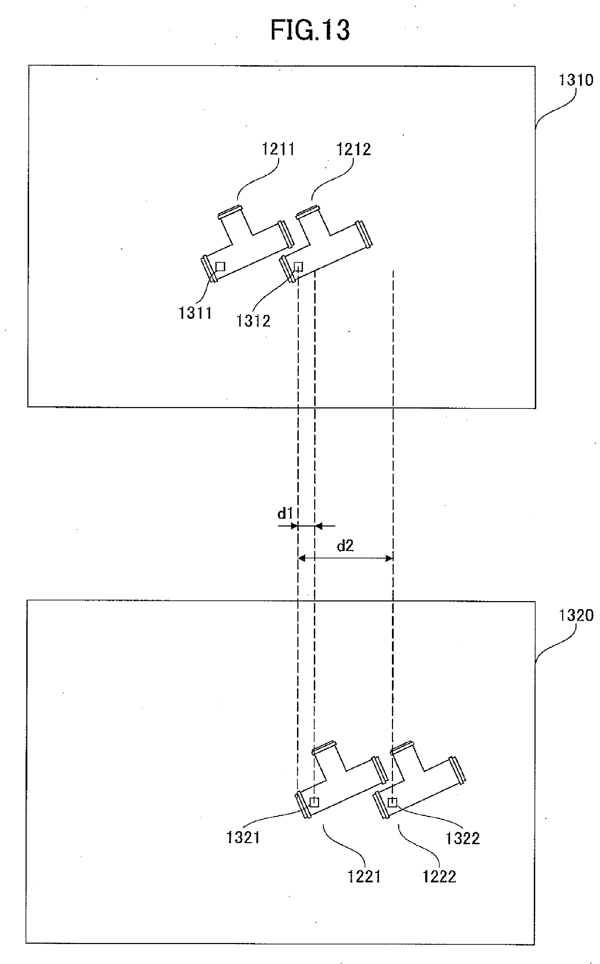

Next, a layout of the objects (products 1200) which are drawn as object images in a captured image, a relationship between the objects and parallax, and the functions of the parallax calculation section 420 are described. FIG. 13 illustrates a captured image (reference image) 1310, which is captured by the imaging section 121, and a captured image (standard image) 1320 which is captured by the imaging section 122.

In FIG. 13, it is assumed that an object image (product image 1211), which is drawn in the captured image 1310, corresponds to an object image (product image 1221) which is drawn in the captured image 1320. Similarly, it is assumed that an object image (product image 1212), which is drawn in the captured image 1310, corresponds to an object image (product image 1222) which is drawn in the captured image 1320.

Namely, in the example of FIG. 13, a point 1311 in the product image 1211 and a point 1321 in the product image 1221 are (correspond to) the same point between the images. Similarly, a point 1312 in the product image 1212 and a point 1322 in the product image 1222 are (correspond to) the same point between the images. In other words, the pixels of the same points between the captured image 1310 and the captured image 1320 are shifted by "d2" in the feed direction of the products 1200 (i.e., the parallax is "d2").

Here, the products 1200 on the conveyor belt 1210 are made of the same material and have the same figure, and are closely and continuously fed (see, FIG. 13). Due to this, as illustrated in FIG. 13, for example, on the left side of the product image 1222 drawn in the captured image 1320, the product image 1221, which has the same material and the same figure as those of the product image 1222, is drawn.

Namely, in a case where the parallax calculation system 100 is applied to FA, the captured images 1310 and 1320, which are captured by the imaging sections 121 and 122, respectively, include a repeated pattern, thereby increasing the frequency of the occurrence of an error.

Especially, when the parallax "d2" between the captured images 1310 and 1320 is large, for example, when the point 1322, which is the same point as the point 1312, is tried to be detected, there is high likelihood of wrongly extracting the point 1321 as the same point as the point 1312.

In this embodiment, in order to resolve the problem, similar to the first embodiment, the parallax calculation section 420 refers to the reference parallax, which is calculated by the reference parallax calculation section 402, when extracting the parallax candidate to be used in the parallax calculation from among plural parallax candidates.

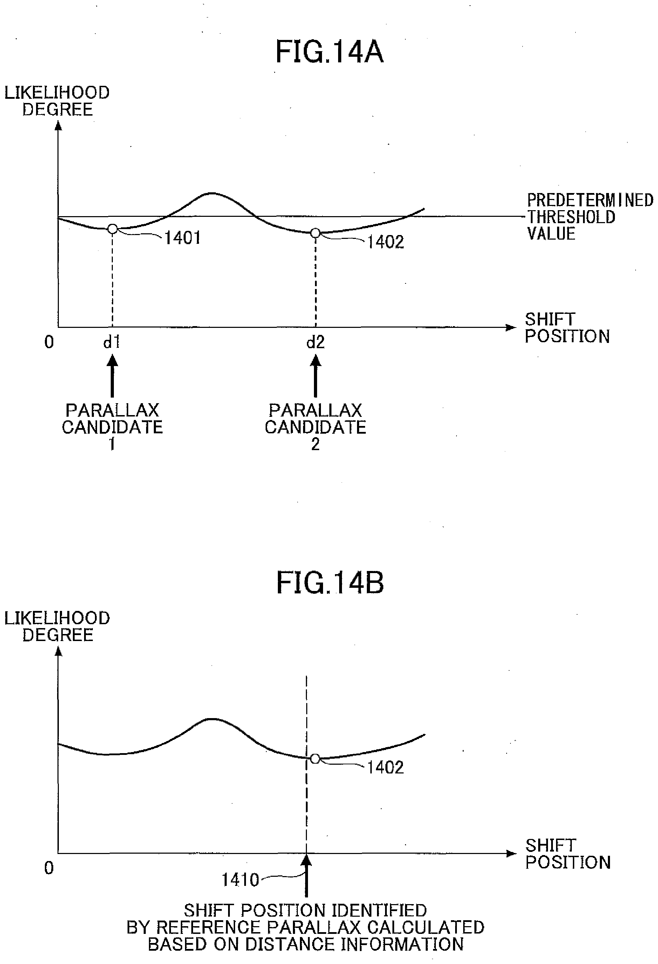

FIGS. 14A and 14B illustrate the values of the likelihood degree at shift positions when the captured image 1310 (reference image) is shifted pixel by pixel relative the captured image 1320 (standard image).

In FIGS. 14A and 14B, a horizontal axis denotes a shifted position when the captured image 1310 is shifted, and a vertical axis denote the likelihood degree corresponding to the shifted position. Here, it is assumed that the values of the vertical axis are normalized in a manner so that the value becomes smaller as the likelihood degree becomes greater and the value becomes greater as the likelihood degree is lower. In the following, the functions of the parallax calculation section 420 are further described with reference to FIGS. 14A and 14B.

As described above, in the captured images 1310 and 1320, plural products 2000 made of the same material and having the same figure are drawn as the product images. Due to this, in a case where the captured image ("reference image") 1310 is shifted relative to the captured image 1320 ("standard image") pixel by pixel, as illustrated in FIG. 14A, the likelihood degree of a predetermined pixel (attention pixel) of the captured image 1310 has plural local minimal points 1401 and 1402. Further, all of the local minimal points are values which are less than a predetermined threshold value.

In order to perform the parallax calculation, first, the parallax calculation section 420 extracts the points where the value of the likelihood degree becomes extreme values (in the case of FIG. 14A, the local minimal values) and where the likelihood degree is higher than a predetermined likelihood degree (in the case of FIG. 14A, where the value of the likelihood degree is smaller than the predetermined threshold value). As a result, the parallax calculation section 420 extracts the local minimal points 1401 and 1402. Then, the parallax calculation section 420 sets the shift positions of the extracted local minimal points 1401 and 1402 as the parallax candidates (parallax candidates 1 and 2, respectively).

Here, in the parallax calculation method in related art, the point having the greatest likelihood degree (i.e., the point where the value of the likelihood degree is the lowest) is extracted as the same point between the captured images from among the plural extracted local minimal points 1401 and 1402, so that the corresponding shift position (in the case of FIG. 14A, the shift position corresponding to the extreme point 1401) is used in further parallax calculation.

On the other hand, in the parallax calculation section 420 of the information processing apparatus 130 according to this embodiment, when plural local minimal points 1401 and 1402 are extracted, the parallax calculation section 420 refers to the "reference parallax" calculated by the reference parallax calculation section 402. Then, the parallax calculation section 420 extracts the parallax candidate that is to be used for further parallax calculation from among the plural parallax candidates 1 and 2, by extracting the same point between the captured images based on a relationship between the shift positions of the local minimal points 1401 and 1402 and the shift position that is identified by the "reference parallax", and determines the parallax.

Details of the above calculation are described with reference to FIG. 14B. The arrow 1410 of FIG. 14B indicates the shift position which is identified by the "reference parallax" calculated based on the distance information by the reference parallax calculation section 402. The parallax calculation section 420 extracts the local minimal point 1402, which is the closest (nearest) to the shift position which is identified by the "reference parallax" from among the local minimal points 1401 and 1402, as the same point between the captured images 1310 and 1320. Then, the parallax calculation section 420 uses the shift position of the local minimal point 1402 (parallax candidate 2) in further parallax calculation, so as to determine the parallax.

As described above, in the parallax calculation section 420, it becomes possible to use the most likely parallax candidate in the parallax calculation by extracting (selecting) the parallax candidate from among plural parallax candidates by using the "distance information" calculated in the laser radar distance measurement section 110. Namely, even when the captured images include a repeated pattern in the left and right direction where an error is likely to occur, it becomes possible to extract an appropriate local minimal point and use the extracted local minimal point in further parallax calculation. As a result, it becomes possible to reduce frequency of occurrence of an error, so that the accuracy of the parallax calculation can be improved.

Fourth embodiment

In the above embodiments, a detailed method of the parallax calculation is not described. However, the parallax may be calculated by using any appropriate method.

For example, a method may be used in which the parallax for a part where texture is strong (a part where edge is strong) such as Edge-Based matching (EBM) is calculated. Further, a method may be used in which the parallax of each of the pixels in the captured image is calculated by using a sub-pixel estimation method (fitting based on equal angle straight line, parabola, high-degree polynomial, etc.). Here, the term "sub-pixel estimation method" refers to a method of calculating decimal parallax based on integer parallax, which provides the minimum index value, and a parallax index value adjacent to the integer parallax by propagating a matching index value from each pixel surrounding by a recurrence formula like Semi-Global Matching (SGM).

Further, in the above embodiments, a case is described where the distance information is calculated based on the reflection light when laser light is emitted (radiated) from the laser radar distance measurement section 110. However, the present invention is not limited to this configuration. For example, the distance information may be calculated based on the reflection wave when an electromagnetic wave is radiated from an electromagnetic wave distance measurement section other than the laser radar distance measurement section.

**Claims**

1. An information processing apparatus (130) that performs parallax calculation on captured images which are captured by first and second imaging units (121, 122), the information processing apparatus comprising:

   an acquisition unit (401) configured to acquire distance information which is calculated based on reflections of electromagnetic waves, wherein the electromagnetic waves have been emitted by a radar distance measurement section (110) in an imaging direction of the first and second imaging units (121, 122), and further based on the distance information indicating distance to a reflection position of the electromagnetic waves;
   a reference calculation unit (402) configured to calculate a reference parallax by using the distance information, a focal length of the imaging units (121, 122), and the distance between optical axes of the first imaging unit (121) and the second imaging unit (122); and
   a determination unit (420) configured to determine parallax of the captured images,
   wherein the determination unit (420) is configured to, when a first captured image captured by the first image is shifted relative to a second captured image captured by the second image pixel by pixel, calculate a likelihood degree for specific pixels between the first captured image and the second captured image at each shifted pixel position,

   **characterized in that** the determination unit (420) is further configured to extract extreme points where the values of the calculated likelihood degree are greater than a predetermined likelihood degree and to determine the parallax of the captured images using the shift position of the extreme point which is the closest to the shift position which is identified by the reference parallax.

2. The information processing apparatus (130) according to claim 1, wherein the determination unit (420) is configured to determine the parallax of the captured images by referring to the reference parallax relative to a pixel, which is included in pixels of the captured images, near pixels to which the distance information is acquired by the acquisition unit (401).

3. A parallax calculation system including plural imaging units (411), an electromagnetic wave distance measurement unit (401), and the information processing apparatus (130) according to any one of the preceding claims.

4. An information processing method of performing parallax calculation on captured images which are captured by first and second imaging units (121, 122), the information processing method comprising:

an acquisition step of acquiring distance information which is calculated based on reflected waves of electromagnetic waves, wherein the electromagnetic waves have been emitted by the radar distance measurement section (110) in an imaging direction of the first and second imaging units (121, 122), and further based on the distance information indicating distance to a reflection position of the electromagnetic waves;
a step of calculating a reference parallax by using the distance information, a focal length of the imaging units (121, 122), and the distance between optical axes of the first imaging unit (121) and the second imaging unit (122); and
a determination step of determining parallax of the captured images,
wherein a likelihood degree is calculated for specific pixels between the first captured image and the second captured image at each shifted pixel position,

**characterized in that** the determination step further includes:

extracting extreme points where the values of the calculated likelihood degree are greater than a predetermined likelihood degree; and
determining the parallax of the captured images using the shift position of the extreme point which is the closest to the shift position which is identified by the reference parallax.

5. A computer-readable program causing a computer of an information processing apparatus, that performs parallax calculation on captured images which are captured by plural imaging units (411), to execute the information processing method according to the preceding claim.

**Patentansprüche**

1. Informationsverarbeitungsvorrichtung (130), die eine Parallaxenberechnung an erfassten Bildern durchführt, die von ersten und zweiten Abbildungseinheiten (121, 122) erfasst werden, wobei die Informationsverarbeitungsvorrichtung umfasst:

eine Erfassungseinheit (401), die so konfiguriert ist, dass sie Entfernungsinformationen erfasst, die auf der Grundlage von Reflexionen elektromagnetischer Wellen berechnet werden, wobei die elektromagnetischen Wellen von einem Radar-Entfernungsmessabschnitt (110) in einer Abbildungsrichtung der ersten und zweiten Abbildungseinheiten (121, 122) ausgesendet wurden, und ferner auf der Grundlage der Entfernungsinformationen, die die Entfernung zu einer Reflexionsposition der elektromagnetischen Wellen angeben;
eine Referenzberechnungseinheit (402), die so konfiguriert ist, dass sie eine Referenzparallaxe unter Verwendung der Abstandsinformationen, einer Brennweite der Abbildungseinheiten (121, 122) und des Abstands zwischen optischen Achsen der ersten Abbildungseinheit (121) und der zweiten Abbildungseinheit (122) berechnet; und
eine Bestimmungseinheit (420), die zur Bestimmung der Parallaxe der aufgenommenen Bilder konfiguriert ist, wobei die Bestimmungseinheit (420) konfiguriert ist, um, wenn ein erstes erfasstes Bild, das durch das erste Bild erfasst wird, relativ zu einem zweiten erfassten Bild, das durch das zweite Bild erfasst wird, Pixel für Pixel verschoben wird, einen Wahrscheinlichkeitsgrad für spezifische Pixel zwischen dem ersten erfassten Bild und dem zweiten erfassten Bild an jeder verschobenen Pixelposition zu berechnen,
**dadurch gekennzeichnet, dass** die Bestimmungseinheit (420) ferner so konfiguriert ist, dass sie Extrempunkte extrahiert, bei denen die Werte des berechneten Wahrscheinlichkeitsgrads größer als ein vorbestimmter Wahrscheinlichkeitsgrad sind, und dass sie die Parallaxe der aufgenommenen Bilder unter Verwendung der Verschiebungsposition des Extrempunkts bestimmt, der der Verschiebungsposition, die durch die Referenzparallaxe identifiziert wird, am nächsten ist.

2. Informationsverarbeitungsvorrichtung (130) nach Anspruch 1,
wobei die Bestimmungseinheit (420) so konfiguriert ist, dass sie die Parallaxe der erfassten Bilder bestimmt, indem sie sich auf die Referenzparallaxe relativ zu einem Pixel bezieht, das in Pixeln der erfassten Bilder enthalten ist, die sich in der Nähe von Pixeln befinden, zu denen die Abstandsinformationen durch die Erfassungseinheit (401) erfasst werden.

3. Parallaxenberechnungssystem mit mehreren Abbildungseinheiten (411), einer elektromagnetischen Wellenentfernungsmesseinheit (401) und der Informationsverarbeitungsvorrichtung (130) nach einem der vorhergehenden Ansprüche.

4. Informationsverarbeitungsverfahren zum Durchführen einer Parallaxenberechnung an erfassten Bildern, die durch eine erste und eine zweite Abbildungseinheit (121, 122) erfasst werden, wobei das Informationsverarbeitungsverfahren umfasst:

   einen Erfassungsschritt des Erfassens von Entfernungsinformationen, die auf der Grundlage von reflektierten Wellen elektromagnetischer Wellen berechnet werden, wobei die elektromagnetischen Wellen von dem Radar-Entfernungsmessabschnitt (110) in einer Abbildungsrichtung der ersten und zweiten Abbildungseinheiten (121, 122) emittiert wurden, und ferner auf der Grundlage der Entfernungsinformationen, die die Entfernung zu einer Reflexionsposition der elektromagnetischen Wellen angeben;
   einen Schritt zum Berechnen einer Referenzparallaxe unter Verwendung der Entfernungsinformation, einer Brennweite der Abbildungseinheiten (121, 122) und des Abstands zwischen optischen Achsen der ersten Abbildungseinheit (121) und der zweiten Abbildungseinheit (122); und
   einen Schritt zur Bestimmung der Parallaxe der aufgenommenen Bilder,
   wobei ein Wahrscheinlichkeitsgrad für spezifische Pixel zwischen dem ersten erfassten Bild und dem zweiten erfassten Bild an jeder verschobenen Pixelposition berechnet wird,
   **dadurch gekennzeichnet, dass** der Bestimmungsschritt ferner umfasst:

      Extrahieren von Extrempunkten, bei denen die Werte des berechneten Wahrscheinlichkeitsgrades größer als ein vorbestimmter Wahrscheinlichkeitsgrad sind; und
      Bestimmung der Parallaxe der aufgenommenen Bilder unter Verwendung der Verschiebungsposition des Extrempunktes, der der Verschiebungsposition, die durch die Referenzparallaxe identifiziert wird, am nächsten ist.

5. Computerlesbares Programm, das einen Computer einer Informationsverarbeitungsvorrichtung, die eine Parallaxenberechnung an erfassten Bildern durchführt, die von mehreren Abbildungseinheiten (411) erfasst werden, veranlasst, das Informationsverarbeitungsverfahren gemäß dem vorhergehenden Anspruch auszuführen.

**Revendications**

1. Appareil de traitement d'informations (130) qui réalise un calcul de parallaxe sur des images capturées qui sont capturées par des première et seconde unités d'imagerie (121, 122), l'appareil de traitement d'informations comprenant :

   une unité d'acquisition (401) configurée pour acquérir des informations de distance qui sont calculées sur la base de réflexions d'ondes électromagnétiques, dans lequel les ondes éplectromagnétiques ont été émises par une section de mesure de distance radar (110) dans une direction d'imagerie des première et seconde unités d'imagerie (121, 122), et en outre sur la base des informations de distance indiquant une distance par rapport à une position de réflexion des ondes électromagnétiques ;
   une unité de calcul de référence (402) configurée pour calculer une parallaxe de référence en utilisant les informations de distance, une longueur focale des unités d'imagerie (121, 122), et la distance entre des axes optiques de la première unité d'imagerie (121) et de la seconde unité d'imagerie (122) ; et
   une unité de détermination (420) configurée pour déterminer une parallaxe des images capturées,
   dans lequel l'unité de détermination (420) est configurée pour, lorsqu'une première image capturée, capturée par la première image, est décalée relativement à une seconde image capturée, capturée par la seconde image pixel par pixel, calculer un degré de probabilité pour des pixels spécifiques entre la première image capturée et la seconde image capturée à chaque position de pixel décalée,

**caractérisé en ce que** l'unité de détermination (420) est en outre configurée pour extraire des points extrêmes où les valeurs du degré de probabilité calculé sont supérieures à un degré de probabilité prédéterminé et pour déterminer la parallaxe des images capturées en utilisant la position de décalage du point extrême qui est la plus près de la position de décalage qui est identifiée par la parallaxe de référence.

2. Appareil de traitement d'informations (130) selon la revendication 1,
dans lequel l'unité de détermination (420) est configurée pour déterminer la parallaxe des images capturées en faisant référence à la parallaxe de référence relativement à un pixel, qui est inclus dans des pixels des images capturées, près de pixels par rapport auxquels les informations de distance sont acquises par l'unité d'acquisition (401).

3. Système de calcul de parallaxe incluant une pluralité d'unités d'imagerie (411), une unité de mesure de distance à ondes électromagnétiques (401), et l'appareil de traitement d'informations (130) selon l'une quelconque des revendications précédentes.

4. Procédé de traitement d'informations, de la réalisation d'un calcul de parallaxe sur des images capturées qui sont capturées par des première et seconde unités d'imagerie (121, 122), le procédé de traitement d'informations comprenant :

une étape d'acquisition, de l'acquisition d'informations de distance qui sont calculées sur la base d'ondes électromagnétiques réfléchies, dans lequel les ondes électromagnétiques ont été émises par la section de mesure de distance radar (110) dans une direction d'imagerie des première et seconde unités d'imagerie (121, 122), et en outre sur la base des informations de distance indiquant une distance par rapport à une position de réflexion des ondes électromagnétiques ;
une étape du calcul d'une parallaxe de référence en utilisant les informations de distance, une longueur focale des unités d'imagerie (121, 122), et la distance entre des axes optiques de la première unité d'imagerie (121) et de la seconde unité d'imagerie (122) ; et
une étape de détermination, de la détermination d'une parallaxe des images capturées,
dans lequel un degré de probabilité est calculé pour des pixels spécifiques entre la première image capturée et la seconde image capturée à chaque position de pixel décalée,
**caractérisé en ce que** l'étape de détermination inclut en outre :

l'extraction de points extrêmes où les valeurs du degré de probabilité calculé sont supérieures à un degré de probabilité prédéterminé ; et
la détermination de la parallaxe des images capturées en utilisant la position de décalage du point extrême qui est la plus près de la position de décalage qui est identifiée par la parallaxe de référence.

5. Programme lisible par ordinateur faisant en sorte qu'un ordinateur d'un appareil de traitement d'informations, qui réalise un calcul de parallaxe sur des images capturées qui sont capturées par une pluralité d'unités d'imagerie (411), exécute le procédé de traitement d'informations selon la revendication précédente.

FIG.1

FIG.2

# FIG.3

INFORMATION PROCESSING APPARATUS 130

CPU 301

RAM 302

STORAGE DEVICE 303

PARALLAX IMAGE GENERATION SECTION 310

305

INPUT AND OUTPUT SECTION 304

# FIG.4

PARALLAX IMAGE GENERATION SECTION ~310

DISTANCE
INFORMATION →

DISTANCE
INFORMATION
ACQUISITION
SECTION ~401

REFERENCE
PARALLAX
CALCULATION
SECTION ~402

CAPTURED
IMAGES →

CAPTURED IMAGE
ACQUISITION
SECTION ~411

CAPTURED IMAGE
CORRECTION
SECTION ~412

PARALLAX
CALCULATION
SECTION ~420

EP 2 911 392 B1

FIG.5

ATTENTION PIXEL

(a)

(b)

# FIG.6A

LIKELIHOOD DEGREE

PREDETERMINED THRESHOLD VALUE

601 602 603

0

SHIFT POSITION

PARALLAX CANDIDATE 1

PARALLAX CANDIDATE 2

PARALLAX CANDIDATE 3

# FIG.6B

LIKELIHOOD DEGREE

601

0

SHIFT POSITION

610

SHIFT POSITION IDENTIFIED BY REFERENCE PARALLAX CALCULATED BASED ON DISTANCE INFORMATION

FIG.7

(a)

(b)

ATTENTION PIXEL

710
711
712
720
721
502
122
200
121
110

## FIG.8A

LIKELIHOOD
DEGREE

PREDETERMINED
THRESHOLD
VALUE

SHIFT
POSITION

0

## FIG.8B

LIKELIHOOD
DEGREE

801

SHIFT
POSITION

0

810

SHIFT POSITION IDENTIFIED
BY REFERENCE PARALLAX CALCULATED
BASED ON DISTANCE INFORMATION

# FIG.9

```
          ┌──────────────────────────────┐
          │      START PARALLAX          │
          │   CALCULATION PROCESS        │
          └──────────────────────────────┘
                        │
                        ▼
        ┌───────────────┴───────────────┐
        │                               │
        ▼                               ▼
┌──────────────────┐            ┌──────────────────────┐
│ IMAGE CAPTURING  │   S901     │  LASER DISTANCE      │   S902
│    PROCESS       │            │  MEASUREMENT         │
│                  │            │    PROCESS           │
└──────────────────┘            └──────────────────────┘
        │                               │
        └───────────────┬───────────────┘
                        ▼
              ┌──────────────────────┐
              │   STEREO IMAGE       │   S903
              │     PROCESS          │
              └──────────────────────┘
                        │
                        ▼
         NO        ◇─────────────────◇   S904
     ┌──────────── │    FINISH ?     │
     │             ◇─────────────────◇
     │                      │ YES
     │                      ▼
     │            ┌──────────────────────────┐
     │            │    END PARALLAX          │
     │            │  CALCULATION PROCESS     │
     │            └──────────────────────────┘
```

# FIG.10

```
                          ┌─────────────────────┐
                          │   START STEREO      │
                          │   IMAGE PROCESS     │
                          └─────────────────────┘
                                    │
                          ┌─────────────────────┐  S1001
                          │ ACQUIRE CAPTURED IMAGES │
                          └─────────────────────┘
                                    │
                          ┌─────────────────────┐  S1002
                          │ CORRECT CAPTURED IMAGES │
                          └─────────────────────┘
                                    │
                          ┌─────────────────────┐  S1003
                          │ SET ATTENTION PIXEL "Pn" │
                          │   OF CAPTURED IMAGE  │
                          │  (REFERENCE IMAGE)   │
                          └─────────────────────┘
                                    │
                          ┌─────────────────────┐  S1004
                          │ CALCULATE LIKELIHOOD │
                          │ DEGREE AT SHIFT POSITIONS │
                          └─────────────────────┘
                                    │
                          ┌─────────────────────┐  S1005
                          │  EXTRACT LOCAL      │
                          │  MINIMAL POINTS     │
                          └─────────────────────┘
                                    │
                                  S1006
                    NO      ╱─────────────────╲
              ┌─────────────│      "Pn"        │
              │             │  = PIXEL NEAR     │
              │             │ IRRADIATED-AREA   │
              │             │    PIXELS ?       │
              │              ╲─────────────────╱
              │                    │ YES
              │                    │
              │                    ▼
   S1010      ▼          ┌─────────────────────┐  S1007
┌─────────────────────┐  │  ACQUIRE DISTANCE   │
│ EXTRACT POINT WHERE │  │   INFORMATION       │
│ VALUE OF LIKELIHOOD │  └─────────────────────┘
│ DEGREE IS LEAST FROM│           │
│ AMONG EXTRACTED LOCAL│  ┌─────────────────────┐  S1008
│  MINIMAL POINTS     │  │ DERIVE SHIFT POSITION│
└─────────────────────┘  │ IDENTIFIED BY REFERENCE│
              │          │    PARALLAX         │
              │          └─────────────────────┘
              │                    │
              │          ┌─────────────────────┐  S1009
              │          │ EXTRACT LOCAL MINIMAL│
              │          │   POINT CLOSEST      │
              │          │ TO DERIVED SHIFT POSITION │
              │          └─────────────────────┘
              │                    │
              └──────────────┬─────┘
                             │
                   ┌─────────────────────┐  S1011
                   │  PERFORM PARALLAX   │
                   │   CALCULATION       │
                   │ OF ATTENTION PIXEL "Pn" │
                   │ BY USING EXTRACTED POINT │
                   └─────────────────────┘
                             │
                           S1012
               NO    ╱─────────────────╲
         ┌───────────│     PARALLAX      │
         │           │ CALCULATION FOR ALL│
         │           │  PIXELS FINISHED   │
         │           │        ?          │
         │            ╲─────────────────╱
         │                   │ YES
   S1013 ▼                   ▼
┌─────────────────┐  ┌─────────────────────┐  S1014
│    n=n+1        │  │ GENERATE PARALLAX IMAGE │
└─────────────────┘  └─────────────────────┘
                             │
                     ┌─────────────────┐
                     │     RETURN      │
                     └─────────────────┘
```

FIG.11A

PARALLAX CALCULATION 100
SYSTEM

121 110 122

200

FIG.11B

PARALLAX CALCULATION 100
SYSTEM

121 110 122

200

1100

511

FIG.11C

# FIG.12

100

PARALLAX CALCULATION
SYSTEM

121  110  122

1210  1200

# FIG.13

# FIG.14A

LIKELIHOOD DEGREE

PREDETERMINED THRESHOLD VALUE

1401

1402

SHIFT POSITION

0    d1    d2

PARALLAX CANDIDATE 1

PARALLAX CANDIDATE 2

# FIG.14B

LIKELIHOOD DEGREE

1402

SHIFT POSITION

0

1410

SHIFT POSITION IDENTIFIED BY REFERENCE PARALLAX CALCULATED BASED ON DISTANCE INFORMATION

## REFERENCES CITED IN THE DESCRIPTION

### Patent documents cited in the description

- JP 2003346130 A
- JP 2013114477 A
- JP 2013174494 A
- WO 2011096251 A
- EP 1909064 A1
- US 5633705 A

### Non-patent literature cited in the description

- Integration LIDAR into Stereo for Fast and Improved Disparity Computation. **HERNÂ'N BADINO et al.** 3D IMAGING, MODELING, PROCESSING, VISUALIZATION AND TRANSMISSION (3DIMPVT), 2011 INTERNATIONAL CONFERENCE ON. IEEE, 16 May 2011, 405-412
- A Survey on Time-of-Flight Stereo Fusion. **NAIR RAHUL et al.** INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER. SPRINGER